Europäisches Patentamt

European Patent Office

Office européen des brevets

(19)

(11) **EP 1 215 828 A1**

(12) **EUROPÄISCHE PATENTANMELDUNG**

(43) Veröffentlichungstag:
 **19.06.2002  Patentblatt 2002/25**

(51) Int Cl.⁷: **H04B 7/26**

(21) Anmeldenummer: **01129557.3**

(22) Anmeldetag: **11.12.2001**

(84) Benannte Vertragsstaaten:
 **AT BE CH CY DE DK ES FI FR GB GR IE IT LI LU
 MC NL PT SE TR**
 Benannte Erstreckungsstaaten:
 **AL LT LV MK RO SI**

(30) Priorität: **12.12.2000  DE 10061692**

(71) Anmelder: **Fraunhofer-Gesellschaft zur
 Förderung der angewandten Forschung e.V.
 80636 München (DE)**

(72) Erfinder:
 • **Rehban, Klaus
  91052 Erlangen (DE)**

 • **Kleinhenz, Thomas
  90439 Nürnberg (DE)**
 • **Hupp, Jürgen
  90425 Nürnberg (DE)**
 • **Heuberger, Albert
  91056 Erlangen (DE)**
 • **Gerhäuser, Heinz
  91344 Waischenfeld (DE)**

(74) Vertreter: **Schoppe, Fritz, Dipl.-Ing. et al
 Patentanwälte Schoppe, Zimmermann,
 Stöckeler & Zinkler,
 Postfach 71 08 67
 81458 München (DE)**

(54) **Basisstation, Mobilteil und Kommunikationsnetz**

(57)    Eine Basisstation (10) umfaßt eine Sende/
Empfangseinrichtung (12) zum Kommunizieren mit einem Mobilteil unter Verwendung einer Hopping-Sequenz aus einer Mehrzahl von Hopping-Sequenzen, wobei eine Hopping-Sequenz eine definierte zeitliche Abfolge von Sende/Empfangsfrequenzen aufweist, und wobei sich jede der Mehrzahl von Hopping-Sequenzen von einer anderen der Mehrzahl von Hopping-Sequenzen unterscheidet. Die Basisstation (10) umfaßt ferner eine Identifikationseinrichtung (14) zur Identifikation der zum Kommunizieren verwendeten Hopping-Sequenzen, so daß der Basisstation (10) genau eine Hopping-Sequenz zugeordnet ist. Ein Mobilteil, das dieser Basisstation (10) zugewiesen ist, erzeugt selbsttätig die von der Basisstation verwendete Hopping-Sequenz. Somit kann durch eine Modifikation der physikalischen Schicht jedoch ohne Änderungen der höheren Protokollschichten von DECT eine Anpassung von nach dem DECT-Standard ausgestalteten Anwendungen an eine in den ISM-Bändern vorgeschriebene Kommunikationstechnik erreicht werden.

Basisstation

Fig. 1

**EP 1 215 828 A1**

**Beschreibung**

Die vorliegende Erfindung bezieht sich auf die drahtlose Kommunikation und insbesondere auf Vorrichtungen und Verfahren, welche für das ISM-Band (ISM Industrial Scientific Medical) geeignet sind.

In jüngster Zeit vermehren sich die Anwendungen für drahtlose Kommunikationssysteme für die Sprach- und Datenübertragung immer mehr. Ein prominenter Vertreter eines modernen drahtlosen Kommunikationssystems ist das DECT-Kommunikationssystem (DECT = Digital Enhanced Cordless Telecommunication). Das DECT-Kommunikationssystem wird durch den ETSI-DECT-Standard (ETS 300 175, Teil 2-3) beschrieben (ETSI = European Telecommunications Standard Institute).

DECT-Kommunikationssysteme verwenden Sende/Empfangsfrequenzen in einem Frequenzband von 1,88 GHz bis 1,9 GHz. Das DECT-Verfahren zeichnet sich durch einen Zeit- und Frequenzmultiplex mit 24 Zeitschlitzen und 10 Frequenzen aus. Dadurch wird eine hohe Kapazität erreicht, wobei ferner vielfältige Zugriffsrechte und Sicherheitsmechanismen für eine verbindungsorientierte und verbindungslose Kommunikation vorhanden sind. Pro Zeitschlitz kann eine Bruttodatenrate von 32 kBit/s erreicht werden, wobei eine Bündelung mehrerer Teilschlitze für höhere Datenraten möglich ist. Bei einer Sendeleistung von 250 mW wird eine Reichweite in Gebäuden von ca. 40 m erreicht, die sich im freien Feld auf bis zu 350 m erstrecken kann. Vielfältige Konfigurationen vom Einzelsystem mit geschlossenen Benutzergruppen bis zum picozellularen Netzwerk mit öffentlichem Zugriff sind möglich. Eine dynamische Kanalselektion ermöglicht eine Koexistenz mehrerer Systeme ohne Frequenzplanung und eine möglichst ungestörte Übertragung.

DECT arbeitet als zentral gesteuertes System, bei dem sich Mobilstationen auf eine Basisstation aufsynchronisieren. Für DECT ist das angesprochene exklusive geschützte Frequenzband vorgesehen. Inzwischen existiert eine Vielzahl von Hardware- und Software-Produkten für unterschiedlichste Anwendungen, welche alle auf dem DECT-Standard aufbauen.

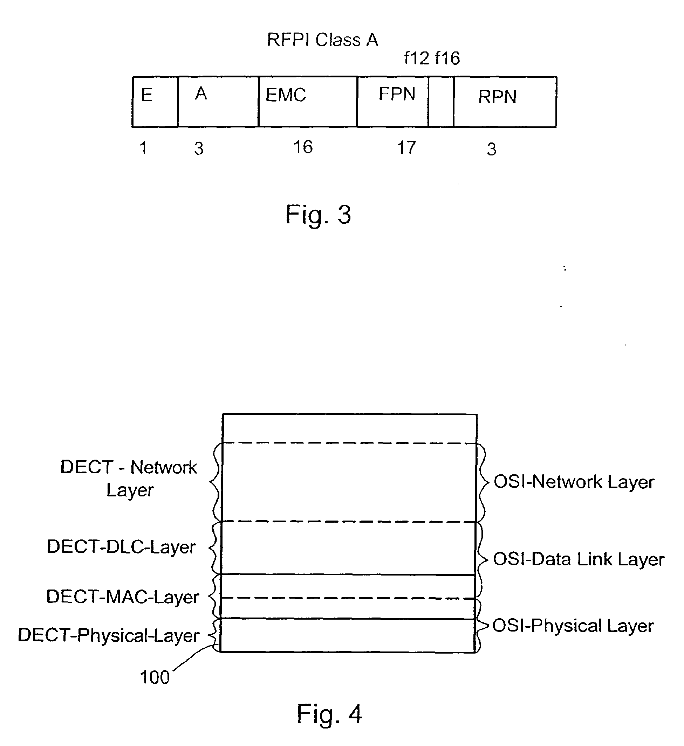

Der DECT-Standard kann, wie es in Fig. 4 beschrieben ist, unter Verwendung des OSI-Schichtenmodells dargestellt werden. Die unterste Schicht von DECT wird als DECT-Physical Layer bezeichnet. Die physische oder physikalische Schicht ist für die Realisierung von Übertragungskanälen über das Funkmedium verantwortlich. Dabei muß sie sich das Medium mit vielen anderen Mobilstationen teilen, die ebenfalls übertragen. Interferenzen und Kollisionen zwischen kommunizierenden Fest- und Mobilstationen werden durch eine dezentral organisierte Nutzung der verfügbaren Dimensionen Ort, Zeit und Frequenz weitgehend vermieden. Bezüglich der Zeitdimension wird das TDMA-Verfahren angewandt. Jede Station richtet auf einem beliebigen freien Zeitschlitz ihren Kanal ein und kann dort mit konstanter Bitrate übertragen. Bezüglich der Frequenzdimension wird das FDMA-Verfahren mit 10 unterschiedlichen Frequenzen angewandt. Das bedeutet, daß jede Station für ihre Übertragung je nach Verfügbarkeit eine beliebige Frequenz aussuchen und belegen kann.

Über der DECT-Physical Layer ist die DECT-MAC-Layer angeordnet (MAC = Medium Access Control). Die MAC-Schicht hat die Aufgabe, Kanäle für höheren Schichten einzurichten, zu betreiben und abzubauen. Die verschiedenen Datenfelder des MAC-Protokolls werden durch zyklische Codes geschützt, die im Empfänger zur Fehlererkennung genutzt werden. Die MAC-Schicht stellt sicher, daß jedem Zeitschlitz dienstspezifische Steuerdaten hinzugefügt werden. Der untere Teil der DECT-MAC-Schicht wird noch zur OSI-physikalischen Schicht hinzugerechnet, während der obere Teil der DECT-MAC-Schicht bereits der OSI-Datenverbindungsschicht hinzugerechnet wird.

Die OSI-Datenverbindungsschicht umfaßt ferner die DECT-DLC-Schicht (DLC = Data Link Control). Diese Schicht weist ähnlich der MAC-Schicht eine umfassende Fehlersicherung auf, die die Zuverlässigkeit der Datenübertragung verbessert. Neben einem Punkt-zu-Punkt-Dienst bietet diese Schicht auch der darüberliegenden Network Layer einen Broadcast-Dienst an. Darüberhinaus umfaßt das Dienste-Spektrum vielerlei Anwendungen von der Übertragung ungeschützter Daten mit geringer Verzögerung, wie z. B. Sprache, bis hin zu geschützten Diensten mit variabler Verzögerung für die Datenübertragung. Die geforderte Datenrate einer bestehenden Verbindung kann jederzeit verändert werden.

Die Vermittlungsschicht oder Network Layer richtet Verbindungen zwischen dem Teilnehmer und dem Netz ein, betreibt sie und löst sie auf.

Wie es bereits angemerkt worden ist, existieren für DECT-Systeme bereits viele fertige Produkte, welche im allgemeinen in die DLC-Schicht oder die Netzwerk-Schicht eingreifen, oder "Aufsätze" auf die Netzwerk-Schicht betreiben. Solche speziellen Hardware- oder Software-Produkte nehmen jedoch im allgemeinen kaum Eingriffe in der physikalischen Schicht oder der MAC-Schicht vor.

Obgleich der DECT-Standard, der ursprünglich nur für Europa gedacht war, einschließlich seiner DECT-Derivate bereits in über 70 Ländern Einzug gehalten hat, welche beispielsweise Japan umfassen, existiert ungünstigerweise kein DECT-Standard bzw. kein DECT-Frequenzband in den Vereinigten Staaten von Amerika, welche jedoch den größten Markt für Mobilkommunikationsanwendungen darstellen.

In den Vereinigten Staaten existieren ISM-Frequenzbänder, die sich von 902 - 928 MHz, 2400 - 2483,5 MHz, 5150 - 5350 MHz bzw. 5725 - 5825 MHz erstrecken. Die oberste Regulierungsbehörde der USA, FCC (FCC = Federal Communications Commission), hat für die Benutzung der ISM-Bänder verschiedene Randbedingungen festgelegt. So sind lediglich maximale Sendeleistungen, maximale Grenzwerte für die Außerbandstrahlung und die maximale Signalbandbreite vorgeschrieben. Darüberhinaus ist die Benutzung von Spreizverfahren zur Reduzierung von Störungen bereits bestehender Kommunikationssysteme festgelegt. Für das 2,4 GHz-Frequenzband sind zwei Übertragungsverfahren definiert. Diese Übertragungsverfahren sind das Frequency Hopping Spread Spectrum-Verfahren und das Direct Sequence Spread Spectrum-Verfahren. Die FCC-Regeln gelten für die USA. In anderen Ländern sind die ISM-Bänder durch entsprechende nationale Vorschriften reglementiert.

In anderen Worten ausgedrückt bedeutet dies, daß die FCC-Regeln eine Verwendung der im DECT-Standard beschriebenen Mechanismen für die Medienzugriffskontrollschicht und die physikalische Schicht verbieten, da insbesondere eine gleichverteilte Nutzung des Frequenzbandes mit Hilfe der angegebenen Spread-Spektrum-Verfahren vorgeschrieben ist. Eine solche gleichverteilte Nutzung des Frequenzbandes ist durch die physikalische Schicht von DECT nicht möglich, da ein Mobilteil und eine Basisstation in einem der 10 Frequenzkanäle kommunizieren.

Dies bedeutet jedoch gleichzeitig auch, daß der Einsatz sämtlicher bisher bekannter DECT-Produkte in den Vereinigten Staaten nicht möglich ist.

Das U.S.-Patent Nr. 4,554,668 offenbart ein Frequenz-Hopping-Funkkommunikationssystem, das zumindest eine Master-Station und eine Mehrzahl von Slave-Stationen umfaßt, die in einer Zweiwege-Frequenz-Hopping-Kommunikation miteinander sind. Jede Slave-Station hat ihre eigene Frequenz-Hopping-Sequenz, die von den Sequenzen der anderen Slave-Stationen unabhängig sind, die jedoch eine gemeinsame Menge von verfügbaren Frequenzen haben. Die Master-Stationen sind in der Lage, jede der Hopping-Sequenzen der Slave-Stationen unmittelbar zu erzeugen. Die Sequenzen der Slave-Stationen werden durch eine Kombination einer Identifikationsnummer der Slave-Station und der Netzzeit bestimmt. Die Frequenz-Hopping-Sequenzen müssen voneinander unabhängig sein, wobei zur Erzeugung eine Familie von Codes verwendet werden kann, die diese Unabhängigkeitseigenschaft haben. Alle Sequenzen werden aus derselben Code-Familie ausgewählt, wobei eine 1-zu-1-Beziehung zwischen jeder Teilnehmernummer und der entsprechenden Frequenz-Hopping-Sequenz hergestellt ist.

Die Aufgabe der vorliegenden Erfindung besteht darin, ein an den DECT-Standard angelehntes Kommunikationskonzept zu schaffen, das flexibler einsetzbar ist.

Diese Aufgabe wird durch eine Basisstation nach Patentanspruch 1, durch ein Mobilteil nach Patentanspruch 9, durch ein Kommunikationsnetz nach Patentanspruch 13, durch ein Verfahren zum Betreiben einer Basisstation nach Patentanspruch 16, durch ein Verfahren zum Betreiben eines Mobilteils nach Patentanspruch 17, durch ein Verfahren zum Betreiben eines Kommunikationsnetzes nach Patentanspruch 18 oder durch ein Verfahren zum Anmelden eines Mobilteils bei einer Basisstation gemäß Patentanpruch 19 gelöst.

Der vorliegenden Erfindung liegt die Erkenntnis zugrunde, daß ein auf dem DECT-Standard basierendes Funksystem im ISM-Band realisiert werden, indem lediglich die physikalische Schicht sowie Teile der unteren MAC-Schicht modifiziert werden, während darüberliegende DECT-Schichten nahezu unverändert bzw. mit geringem Entwicklungsaufwand an die Erfordernisse im ISM-Band, d. h. an die geänderten Spezifikationen der untersten Schichten, angepaßt werden können. Wie für das ISM-Band vorgeschrieben, kommunizieren eine erfindungsgemäße Basisstation und ein erfindungsgemäßes Mobilteil unter Verwendung einer festgelegten Hopping-Sequenz, welche eine definierte zeitliche Abfolge von Sende/Empfangsfrequenzen aufweist.

Erfindungsgemäß sind die Basisstation und das Mobilteil ausgelegt, um unter Verwendung einer Hoping-Sequenz aus einer Mehrzahl von verschiedenen Hopping-Sequenzen kommunizieren zu können. Zu diesem Zweck umfaßt eine Basisstation eine Identifikationseinrichtung, welche die zum Kommunizieren verwendete Hopping-Sequenz identifiziert, so daß eine bestimmte Basisstation unter Verwendung genau einer Hopping-Sequenz arbeitet, was bedeutet, daß verschiedene Basisstationen unter Verwendung verschiedener Hopping-Sequenzen senden, so daß eine gegenseitige Störung unwahrscheinlich ist.

Ein erfindungsgemäßes Mobilteil umfaßt neben einer Sende/Empfangseinrichtung zum Kommunizieren mit einer bestimmten Hopping-Sequenz eine Speichereinrichtung zum Speichern von Informationen über die spezielle Hopping-Sequenz, die bei der Kommunikation mit einer bestimmten Basisstation zu verwenden ist.

Gemäß dem DECT-Standard wird ein Mobilteil über einen speziellen Anmeldevorgang, welcher vor der ersten Inbetriebnahme des Mobilteils durchgeführt wird, einer Basisstation fest zugeordnet. Erfindungsgemäß wird in diesem Anmeldevorgang die Speichereinrichtung des Mobilteils beschrieben, so daß hierdurch das Mobilteil Informationen über die Hopping-Sequenz erhält, die die Basisstation verwendet, die dem Mobilteil fest zugeordnet ist.

Es sei darauf hingewiesen, daß keine Signalisierungsaufwand betrieben werden muß, damit ein Mobilteil auf eine Basisstation synchronisiert ist. Das Mobilteil kennt die von der Basisstation verwendete Hopping-Sequenz. Bei einer ersten Anmeldung eines Mobilteil kennt das Mobilteil jedoch noch nicht die Identität der Basisstation und somit auch noch nicht die Hopping-Sequenz der Basisstation. Daher findet erfindungsgemäß ein Anmeldevorgang statt, der auch als On-Air-Subscription bezeichnet wird. Hierbei wird die Basisstation in einen Anmeldemodus versetzt, der darin besteht, daß die Basisstation eine vordefinierte Anmelde-Hopping-Sequenz verwendet, die auch das Mobilteil kennt, da diese Anmelde-Hopping-Sequenz dem Mobilteil z. B. bereits bei der Herstellung einprogrammiert worden ist. Es sei darauf hingewiesen, daß auch diese vorbestimmte Anmelde-Hopping-Sequenz FCC-konform sein muß. Mittels dieser Anmelde-Hopping-Sequenz teilt die Basisstation dem Mobilteil sein Identität mit, was unmittelbar dazu führt, daß das Mobilteil die Sende-Hopping-Sequenz der Basisstation kennt. Damit ist die On-Air-Subscription abgeschlossen. Ab hier sind dann keinerlei Signalisierungskommunikationen zwischen Mobilteil und Basisstation mehr erforderlich, da das Mobilteil nun für alle weiteren Kommunikationen die Sende-Hopping-Sequenz der Basisstation kennt. Dieses Verfahren kann auch dazu verwendet werden, ein Mobilteil bei einer neuen Basisstation anzumelden und damit bei einer alten Basisstation abzumelden.

Ein erfindungsgemäßes Mobilteil umfaßt ferner eine Synchronisationseinrichtung, welche feststellt, ob in einer Funkzelle die bestimmte Basisstation sendet. Hierzu müssen von dem Mobilteil keinerlei Signalisierungsinformationen ausgesendet werden. Stattdessen "belauscht" das Mobilteil mittels seiner Synchronisationseinrichtung bei einer Aktivierung durch einen Betreiber den Funkverkehr in der Funkzelle und stellt fest, ob eine Basisstation mit einer Hopping-Sequenz sendet, die der Hopping-Sequenz entspricht, welche in dem Mobilteil für eine Kommunikation fest eingestellt ist.

Stellt die Synchronisationseinrichtung des Mobilteils fest, daß eine solche Übereinstimmung vorhanden ist, so aktiviert die Synchronisationseinrichtung die Sende/Empfangseinrichtung, welche dann genau mit der Hopping-Sequenz aus einer Mehrzahl von unterschiedlichen Hopping-Sequenzen den Sende/Empfangsbetrieb aufnimmt, um mit der Basisstation zu kommunizieren, der das Mobilteil fest zugeordnet ist.

Bevorzugterweise wird durch die Identifikationseinrichtung der Basisstation nicht nur die Hopping-Sequenz identifiziert, sondern auch eine Hopping-Phase. In synchronen Netzen senden verschiedene benachbart angeordnete Basisstationen mit derselben Hopping-Sequenz. Jede Basisstation hat jedoch eine andere Hopping-Phase, so daß die gegenseitige Störung der Basisstationen ausgeschlossen wird, da benachbarte Basisstationen immer unterschiedliche Sende/Empfangs-Frequenzen haben, obwohl sie die gleiche Hopping-Sequenz verwenden.

Dies ermöglicht es, daß ein Mobilteil, das ja nur für die Kommunikation mit einer einzigen Hopping-Sequenz vorbereitet ist, die durch eine Basisstation festgelegte Funkzelle verlassen kann und mit der in der benachbarten Funkzelle angeordneten Basisstation den Funkbetrieb ohne Unterbrechung aufnehmen kann. Dieser Vorgang wird auch als "Seamless-Hand-Over"-Operation bezeichnet.

An dieser Stelle sei darauf hingewiesen, daß ein erfindungsgemäßes Mobilteil eine passive Aufsynchronisation durchführt. Ein erfindungsgemäßes Mobilteil sendet keine Signalisierungsinformationen zu einer Basisstation, um beispielsweise herauszufinden, welche Hopping-Sequenz die Basisstation verwendet. Stattdessen ist die von einem Mobilteil zu verwendende Hopping-Sequenz ebenso wie die von einer Basisstation zu verwendende Hopping-Sequenz fest eingestellt, so daß durch diese feste Einstellung auch eine Festlegung dahingehend getroffen wird, daß ein Mobilteil immer mindestens einer Basisstation fest zugeordnet ist bzw. einer Mehrzahl von Basisstationen, welche in einem synchronen Netz mit der gleichen Hopping-Sequenz arbeiten, jedoch eine unterschiedliche Hopping-Phase haben.

Bevorzugterweise werden die Hopping-Sequenz und optional auch die Hopping-Phase aus Identitätsinformationen der Basisstation abgeleitet. Hierzu wird gemäß einem bevorzugten Ausführungsbeispiel der vorliegenden Erfindung die RFPI-Nummer verwendet (RFPI = Radio Fixed Part Identity), welche in einem DECT-Netzwerk zur eindeutigen Identifikation einer Basisstation dient. Sowohl die Basisstation als auch das Mobilteil sind erfindungsgemäß so gestaltet, daß sie unter Verwendung der RFPI die Hopping-Sequenz, die von der jeweiligen Sende/Empfangseinrichtung zu verwenden ist, ohne weiteres selbst ableiten können, so daß keinerlei Signalisierungsaufwand zur Festlegung einer Hopping-Sequenz erforderlich ist, welcher andernfalls stattfinden müßte, damit Sender und Empfänger dieselbe Hopping-Sequenz verwenden.

Bevorzugte Ausführungsbeispiele der vorliegenden Erfindung werden nachfolgend bezugnehmend auf die beiliegenden Zeichnungen detailliert erläutert. Es zeigen:

Fig. 1    ein Blockschaltbild einer erfindungsgemäßen Basisstation;

Fig. 2    ein Blockschaltbild eines erfindungsgemäßen Mobilteils;

Fig. 3    eine Darstellung der DECT-RFPI-Nummer für Class-A; und

Fig. 4    eine schematische Darstellung des DECT- und des OSI-Schichtenaufbaus.

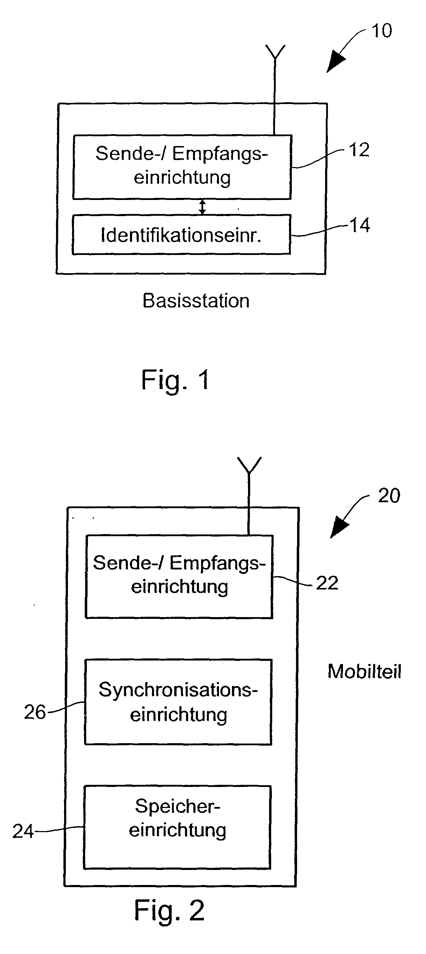

Fig. 1 zeigt ein schematisches Blockschaltbild einer erfindungsgemäßen Basisstation 10. Die Basisstation 10 umfaßt eine Sende/Empfangseinrichtung 12, sowie eine mit derselben verkoppelte Identifikationseinrichtung 14. Die Sende/Empfangseinrichtung kommuniziert mit einem Mobilteil unter Verwendung einer Hopping-Sequenz aus einer Mehrzahl von Hopping-Sequenzen, wobei eine Hopping-Sequenz eine definierte zeitliche Abfolge von Sende/Empfangsfrequenzen aufweist, und wobei sich jede der Mehrzahl von Hopping-Sequenzen von einer anderen der Mehrzahl von Hopping-Sequenzen unterscheidet.

Die Identifikationseinrichtung 14 dient zur Identifikation der zum Kommunizieren verwendeten Hopping-Sequenz, so daß der Basisstation genau eine Hopping-Sequenz zugeordnet ist.

Gemäß einem bevorzugten Ausführungsbeispiel der vorliegenden Erfindung dient die Identifikationseinrichtung ferner zur Identifikation der Hopping-Phase. Die Hopping-Phase ist der zeitliche Versatz zwischen den gleichen Hopping-Sequenzen von mehreren Basisstationen eines synchronen Netzwerks.

In einem synchronen Netzwerk sind viele Basisstationen vorhanden, welche alle mit der gleichen Hopping-Sequenz arbeiten. Jeder Basisstation ist eine Funkzelle zugeordnet. Bei einer speziellen Anwendung in einem Bürogebäude könnte beispielsweise jedes Stockwerk eine eigene Basisstation haben, wobei der Wunsch besteht, daß ein Teilnehmer mit einem einzigen Mobilteil telefonieren kann, während er von einem Stockwerk in das nächste Stockwerk geht. Damit die Basisstation des einen Stockwerks nicht den Funkbetrieb einer Basisstation eines anderen Stockwerks stört, wird ein Hopping-Versatz eingeführt. Stehen beispielsweise 10 Kanäle zur Verfügung, so besteht eine einfache Hopping-Sequenz darin, daß nacheinander alle Kanäle in ihrer numerischen Reihenfolge benutzt werden. Damit ein Benutzer mit einem Mobilteil von der Funkzelle der einen Basisstation in die Funkzelle der anderen Basisstation gehen kann, muß die Basisstation dieselbe Hopping-Sequenz verwenden. Die andere Basisstation arbeitet jedoch mit einem Hopping-Versatz, der beispielsweise in einer Zeitdauer bestehen kann, die der Zeit entspricht, welche benötigt wird, um in fünf Kanälen aufeinanderfolgend zu senden. Ist die eine Basisstation in ihrer Hopping-Sequenz daher gerade beim Kanal 2, so wäre die andere Basisstation in ihrer Hopping-Sequenz beim Kanal 7. Schaltet dann die eine Basisstation auf den Kanal 3 um, so schaltet die andere Basisstation zu diesem Zeitpunkt auf den Kanal 8 um, usw.

Im nachfolgenden wird auf die Auswahl der Hopping-Sequenz eingegangen. Die Identität der Basisstation wird in zwei Blöcke unterteilt, und zwar in einen ersten Block, welcher Hopping-Sequenz-Informationen umfaßt, und in einen zweiten Block, welcher Hopping-Phasen-Informationen umfaßt. Der erste Block dient zur eindeutigen Bestimmung der Hopping-Sequenz. Im Idealfall ist dieser Block für jede Basisstation einmalig und es besteht eine eindeutige Zuordnung zur Hopping-Sequenz, d. h. es gibt mindestens genauso viele Hopping-Sequenzen wie Basisstationen.

Bei praktischen Anwendungen, bei denen nur eine begrenzte Anzahl von Hopping-Sequenzen zur Verfügung steht, wird der Nummernraum aus dem ersten Block geeignet auf die Anzahl der verfügbaren Hopping-Sequenzen abgebildet.

Um in einem synchronen Netzwerk einen ununterbrochenen Kommunikationsfluß bei der Bewegung eines Teilnehmers mit einem Mobilteil innerhalb dieses Netzwerkes zu gewährleisten, wird der erste Block der Basisstations-Identität für alle Basisstationen gleich sein. Somit wird sichergestellt, daß alle Basisstationen die gleiche Basis-Hopping-Sequenz haben. Um gegenseitige Störungen zu vermeiden, wird der Block 2 eine definierte Hopping-Phase vorschreiben, welcher für alle Basisstationen in einem synchronen Netzwerk unterschiedlich sein muß.

Im nachfolgenden wird auf die Eigenschaften der Hopping-Sequenzen eingegangen, wenn die erfindungsgemäße Basisstation und das erfindungsgemäße Mobilteil in einem durch die FCC regulierten ISM-Band eingesetzt werden soll. Stehen im ISM-Band N Frequenzen zur Verfügung, so besteht eine Hopping-Sequenz aus der periodischen Fortsetzung einer Permutation dieser N Frequenzen. Dies bedeutet in anderen Worten, daß jede Frequenz in der Hopping-Sequenz genau einen definierten Nachfolger hat. Hat ein Band beispielsweise 10 unterschiedliche Frequenzen, so lautet eine Sequenz z. B.

1, 3, 5, 7, 9, 2, 4, 6, 8, 10.

Die Frequenz Nr. 1 hat als Nachfolger lediglich die Frequenz Nr. 3, jedoch nicht z. B. gleichzeitig in der selben Sequenz die Frequenz Nr. 5. Ein Mobilteil kann somit immer bei Kenntnis der von der Basisstation verwendeten Hopping-Sequenz und bei Empfang einer der Frequenzen dieser Sequenz auf eindeutige Art und Weise die nächste Frequenz in der Sequenz ermitteln. Damit ist keinerlei Signalisierungsbetrieb zwischen einem Mobilteil und einer Basisstation zum Aufsynchronisieren des Mobilteils nötig.

Wesentlich ist, daß bei Kenntnis einer Frequenz sowie der Identität der Basisstation das Mobilteil die nächste Frequenz völlig selbsttätig und ohne weitere Informationen von der Basisstation zu benötigen bestimmen kann.

Um die FCC-Regeln zu erfüllen, wird als weitere Randbedingung für alle verschiedenen Hopping-Sequenzen eine Gleichverteilung der verwendeten Frequenzen im zur Verfügung stehenden Band sichergestellt.

Im nachfolgenden wird auf Fig. 2 eingegangen, um den Aufbau eines erfindungsgemäßen Mobilteils 20 darzustellen. Ein erfindungsgemäßes Mobilteil 20 umfaßt eine Sende/Empfangseinrichtung 22, welche analog zur Sende/Empfangseinrichtung 12 der Basisstation von Fig. 1 aufgebaut ist. Das Mobilteil 20 umfaßt ferner eine Speichereinrichtung 24 sowie eine Synchronisationseinrichtung 26. Die Speichereinrichtung dient zum Speichern von Informationen über die spezielle Hopping-Sequenz, die bei der Kommunikation mit einer bestimmten Basisstation zu verwenden ist, so daß das Mobilteil durch die gespeicherten Informationen für eine Kommunikation mit der bestimmten Basisstation unter Verwendung der speziellen Hopping-Sequenz vorbestimmt ist. In anderen Worten bedeutet dies, daß das Mobilteil von vornherein nur mit einer bzw. mehreren Basisstationen kommunizieren soll, welche dieselbe Hopping-Sequenz hat bzw. haben. Eine Kommunikation mit einer anderen Hopping-Sequenz ist nicht gewünscht und soll auch nicht stattfinden. Hierzu dient die Synchronisationseinrichtung 26. Sie stellt zunächst fest, ob in einer Funkzelle die bestimmte Basisstation sendet, die die spezielle Hopping-Sequenz einsetzt, welche durch die in der Speichereinrichtung gespeicherten Informationen definiert ist. Die Synchronisationseinrichtung 26 ist hierzu angeordnet, um unter Verwendung der in der Speichereinrichtung 24 gespeicherten Informationen bei einem Empfang einer Mehrzahl von gültigen Empfangsdaten herauszufinden, ob die spezielle Hopping-Sequenz vorhanden ist. Falls die spezielle Hopping-Sequenz vorliegt, aktiviert die Synchronisationseinrichtung 26 die Sende/Empfangseinrichtung 22, um einen Kommunikationsbetrieb des Mobilteils zu veranlassen.

Es wird besonders darauf hingewiesen, daß dies alles stattfindet, ohne daß die Synchronisationseinrichtung 26 Informationen zu einer Basisstation sendet oder etwas empfängt, um die Basisstation hinsichtlich ihrer verwendeten Hopping-Sequenz zu befragen.

Möchte sich das Mobilteil 20 zu einer bestimmten Basisstation synchronisieren, so muß das Mobilteil somit lediglich Kenntnis über die Identität dieser Station haben, wobei die Kenntnis über die Identität dieser Basisstation durch die in der Speichereinrichtung gespeicherten Informationen gegeben ist. Daraus leitet das Mobilteil die spezielle Hopping-Sequenz der Basisstation ab, um dieselbe Hopping-Sequenz selbst zu verwenden.

Beim Synchronisieren muß das Mobilteil 20 nur ein einziges Mal die gewünschte Basisstation korrekt empfangen, um der Hopping-Sequenz der Basisstation folgen zu können. Ein Austausch von Signalisierungsmeldungen, wie z. B. die nächste Frequenz in der Hopping-Sequenz, etc., muß zu diesem Zeitpunkt nicht folgen.

Im Falle einer Hand-Over-Operation führt die Synchronisationseinrichtung des Mobilteils in der neuen Funkzelle wieder eine Synchronisation durch, welche im wesentlichen identisch zur Synchronisation stattfindet, die das Mobilteil in der Zelle durchgeführt hatte, die es verlassen hat. Hierzu wird die Synchronisationseinrichtung wieder den Funkverkehr in der benachbarten Zelle überwachen und bereits nach wenigen gültigen Informationspaketen ermittelt haben, mit welcher Hopping-Phase die Basisstation in dieser Funkzelle im Vergleich zur vorherigen Funkzelle arbeitet. Damit wird auf schnelle Art und Weise und ohne jeglichen aktiven Signalisierungsaufwand von Seiten des Mobilteils eine Hand-Over-Operation vorbereitet.

Im nachfolgenden wird anhand von Fig. 3 auf eine bevorzugte Art und Weise zum Identifizieren der zum Kommunizieren verwendeten Hopping-Sequenz eingegangen. Fig. 3 zeigt schematisch die DECT-RFPI (RFPI = Radio Fixed Part Identity), welche gemäß dem DECT-Standard in einem DECT-Netzwerk zur Identifikation der Basisstation verwendet wird. Erfindungsgemäß werden die Hopping-Sequenz sowie die Hopping-Phase, d. h. der Versatz zwischen zwei gleichen Basisstation-Hopping-Sequenzen in einem synchronen Netzwerk, aus der RFPI abgeleitet, welche in Fig. 3 beispielhaft für Class A abgebildet ist. Die RFPI besteht neben den Teilen E, A und EMC, welche für die vorliegende Erfindung nicht von Bedeutung sind, aus der FPN-Nummer (FPN = Fixpart Number) und der RPN-Nummer (RPN = Radio Fixpart Number). Die FPN, welche 17 Bit umfaßt, wird zur Angabe der Hopping-Sequenz verwendet, wobei hierzu die Bits f12 bis f16 ausreichen, wobei f12 das höchstwertige Bit und f16 das niederstwertige Bit für die Hopping-Sequenz-Identifikation sind.

Die RPN, die 3 Bit lang ist, bestimmt dagegen die Hopping-Phase.

Die Basisstation generiert mittels diesen Bits durch Verwendung der nachfolgenden Gleichung ihre spezielle vordefinierte Hopping-Sequenz:

$$f(i) = [Basishoppingsequenz(i + RPN) + RFPI(f12{:}f16) * 3]$$

$$MODULO\ N_{FHopmax}$$

In dieser Gleichung bedeutet "i" der aktuelle Frequenzindex, "Basishoppingsequenz" die allgemeine gemeinsame Hopping-Sequenz für alle Basisstationen und Mobilstationen, aus der sich alle speziellen Hopping-Sequenzen der einzelnen Module ableiten, wobei die Frequenzen dieser Basishoppingsequenz vorzugsweise gleich verteilt sind, RFPI (f12:f16) die Bits f12 bis f16 der RFPI-Nummern, und $N_{FHopmax}$ die maximale Anzahl der Hopping-Frequenzen.

Die RPN der RFPI-Nummer, und insbesondere die drei niederstwertigen Bits (LSB (1:3)), bestimmt dabei den zeitlichen Versatz zwischen zwei Hopping-Sequenzen in einem synchronen Netzwerk.

Ein Mobilteil, das sich bei einer bestimmten Basisstation synchronisieren möchte, muß somit nur Kenntnis über die RFPI dieser Station haben. Diese Kenntnis wird dem Mobilteil in einem Initialisierungs-Anmeldevorgang mitgeteilt welcher vor der ersten Inbetriebnahme des Mobilteils stattfindet und nur einmal durchgeführt werden muß. Ist ein Mobilteil einmal initialisiert, so wird es sich immer, wenn es eingeschaltet wird, passiv aufsynchronisieren, d. h. es wird keine IN-QUIRY-Anfrage oder etwas ähnliches an eine Basisstation absenden, um sich dort anzumelden bzw. um Hopping-Sequenz oder Hopping-Phase zu erfragen. Aus der RFPI der einem Mobilteil zugeordneten Basisstation kann das Mobilteil dann selbsttätig die spezielle Hopping-Sequenz unter Verwendung der angegebenen Gleichung berechnen. Sobald das Mobilteil ein gültiges Synchronisationsfeld und A-Feld der Basisstation empfangen hat, ist es zu dieser Basisstation synchron. Ein Austausch von Signalisierungsmeldungen muß daher zu keinem Zeitpunkt erfolgen.

Durch die vorliegende Erfindung kann somit ein auf dem DECT-Standard basierendes Funksystem im ISM-Band realisiert werden. Vorhandene Protokollimplementierungen für DECT-Anwendungen können lediglich durch Modifikation der unteren Protokollschichten an die Erfordernisse im ISM-Band angepaßt werden, wobei die höheren Protokollschichten nahezu unverändert übernommen werden können.

Das erfindungsgemäße Konzept liefert insbesondere dahingehend Vorteile, daß die Basisstation-Identität eindeutig die Hopping-Sequenz bestimmt. Die Kollisionswahrscheinlichkeit in einem asynchronen Netzwerk und die dadurch verursachten Störungen werden minimiert, da die Basisstationen in asynchronen Systemen alle mit unterschiedlichen Hopping-Sequenzen arbeiten. Somit können in einer einzigen Funkzelle viele verschiedenen Basisstationen betrieben werden, welche alle mit unterschiedlichen Hopping-Sequenzen arbeiten, so daß keine gegenseitige Störung der einzelnen Basisstation/Mobilteil-Kommunikationen auftreten.

Weiterhin ist die vorliegende Erfindung dahingehend vorteilhaft, daß eine Synchronisation einzig mittels Kenntnis der Identität der Basisstation erfolgt. Ein Nachrichtenfluß zwischen dem Mobilteil und der Basisstation, d. h. ein Austausch von Signalisierungsmeldungen, ist nicht erforderlich. Schließlich ist eine Hand-Over-Operation, d. h. ein Wechsel der Basisstation, durch Mobilteile in synchronen Netzwerken durch die Kenntnis der Identität der Basisstation und des Framecounter (Rahmenzählwert) möglich. Der Rahmenzählwert erlaubt es der Synchronisationseinrichtung 26 eines Mobilteils zusätzlich, die Hopping-Phase, d. h. den zeitlichen Versatz in den Hopping-Sequenzen zweier benachbarter Basisstationen, die die gleiche Hopping-Sequenz verwenden, zu bestimmen.

**Patentansprüche**

1. Basisstation (10) mit folgenden Merkmalen:

    einer Sende/Empfangseinrichtung (12) zum Kommunizieren mit einem Mobilteil (20) unter Verwendung einer Hopping-Sequenz aus einer Mehrzahl von Hopping-Sequenzen,
    wobei eine Hopping-Sequenz eine definierte zeitliche Abfolge von Sende/Empfangsfrequenzen aufweist,
    wobei in einer Hopping-Sequenz jede Sende/Empfangsfrequenz genau eine definierte nachfolgende Sende/Empfangsfrequenz hat, und
    wobei sich jede der Mehrzahl von Hopping-Sequenzen von einer anderen der Mehrzahl von Hopping-Sequenzen hinsichtlich der definierten zeitlichen Abfolge von Sende/Empfangsfrequenzen unterscheidet;

    einer Identifikationseinrichtung (14) zur Identifikation der zum Kommunizieren verwendeten Hopping-Sequenz aus der Mehrzahl von Hopping-Sequenzen, so daß der Basisstation (10) genau eine Hopping-Sequenz zugeordnet ist, wobei die Identifikationseinrichtung (14) Informationen über eine Identität der Basisstation umfaßt; und

    einer Einrichtung zum Erzeugen der genau einen Hopping-Sequenz unter Verwendung einer abgespeicherten Basishoppingsequenz, die für die Basisstation und für das Mobilteil, mit dem kommuniziert werden soll, gleich ist, und den Informationen über eine Identität der Basisstation.

2. Basisstation nach Anspruch 1, bei der die Sende/Empfangseinrichtung (12) angeordnet ist, um jede der Mehrzahl von Hopping-Sequenzen so zu erzeugen, daß eine Hopping-Sequenz sämtliche Sende/Empfangsfrequenzen, die in einem festgelegten Frequenzband zur Verfügung stehen, umfaßt.

3. Basisstation nach Anspruch 2,
bei dem das festgelegte Frequenzband eines der ISM-Bänder ist, dessen Nutzung durch nationale Vorschriften spezifiziert ist.

4. Basisstation nach einem der vorhergehenden Ansprüche,
bei dem die Sende/Empfangseinrichtung (12) ein OSI-Schichtenmodell aufweist, wobei die Sende/Empfangseinrichtung angeordnet ist, um als Unterbau für die Data-Link-Schicht und die Network-Schicht nach dem DECT-Standard zu arbeiten.

5. Basisstation nach einem der vorhergehenden Ansprüche,
bei dem Sende/Empfangsfrequenzen der Basishoppingsequenz in einem definierten Frequenzband gleich verteilt sind.

6. Basisstation nach einem der vorhergehenden Ansprüche,

bei dem die Identifikationseinrichtung die RFPI-Nummer nach dem DECT-Standard umfaßt.

7.  Basisstation nach einem der vorhergehenden Ansprüche,
    bei der die Identifikationseinrichtung (14) ferner angeordnet ist, um eine bestimmte Hopping-Phase der Basisstation zuzuordnen, wobei die Hopping-Phase festlegt, wie stark die von der Sende/Empfangseinrichtung zur Kommunikation verwendete Hopping-Sequenz zu derselben Hopping-Sequenz zeitlich versetzt ist, die von einer in einer anderen Funkzelle eines synchronen Netzes angeordneten Basisstation verwendet wird.

8.  Basisstation nach einem der Ansprüche 1 - 7,
    bei der die Einrichtung zum Erzeugen angeordnet ist, um die genau eine Hopping-Sequenz gemäß folgender Gleichung zu erzeugen:

$$f(i) = [\text{Basishoppingsequenz}\ (i + RPN) + RFPI(f12{:}f16)\ *$$

$$3]\ \text{MODULO}\ N_{FHopmax}$$

wobei f eine Frequenz der genau einen Hopping-Sequenz ist, wobei "i" ein aktueller Frequenzindex ist, wobei "Basishoppingsequenz" die Basishoppingsequenz ist, wobei RFPI (f12:f16) die Bits f12 bis f16 der RFPI-Nummer gemäß dem DECT-Standard sind, die der Basisstation zugeordnet ist, wobei RPN die RPN-Nummer der Basisstation gemäß dem DECT-Standard ist, und wobei $N_{FHopmax}$ die maximale Anzahl der Hopping-Frequenzen in der genau einen Hopping-Sequenz ist.

9.  Mobilteil (20) mit folgenden Merkmalen:

    einer Sende/Empfangseinrichtung (22) zur Kommunikation mit einer Basisstation unter Verwendung einer Hopping-Sequenz aus einer Mehrzahl von Hopping-Sequenzen, wobei eine Hopping-Sequenz eine definierte zeitliche Abfolge von Sende/Empfangsfrequenzen aufweist, wobei in einer Hopping-Sequenz jede Sende/Empfangsfrequenz genau eine definierte nachfolgende Sende/Empfangsfrequenz hat, und wobei sich jede der Mehrzahl von Hopping-Sequenzen von einer anderen der Mehrzahl von Hopping-Sequenzen hinsichtlich der definierten zeitlichen Abfolge von Sende/Empfangsfrequenzen unterscheidet;

    einer Speichereinrichtung (24) zum Speichern von Informationen über die spezielle Hopping-Sequenz, die bei der Kommunikation mit einer bestimmten Basisstation zu verwenden ist, so daß das Mobilteil durch die gespeicherten Informationen für eine Kommunikation mit der bestimmten Basisstation unter Verwendung der speziellen Hopping-Sequenz vorbestimmt ist; und

    einer Synchronisationseinrichtung (26) zum Feststellen, ob in einer Funkzelle die bestimmte Basisstation sendet, wobei die Synchronisationseinrichtung (26) angeordnet ist, um unter Verwendung der gespeicherten Informationen bei einem Empfang einer Mehrzahl von gültigen Empfangsdaten herauszufinden, ob dieselben gemäß der speziellen Hopping-Sequenz eintreffen, und um bei Vorliegen der speziellen Hopping-Sequenz die Sende/Empfangseinrichtung (22) zu aktivieren, ohne daß die Synchronisationseinrichtung (26) Signalisierungsinformationen zu einer Basisstation sendet, um die Basisstation hinsichtlich ihrer verwendeten Hopping-Sequenz zu befragen; und

    einer Einrichtung zum Erzeugen der Hopping-Sequenz unter Verwendung einer abgespeicherten Basishoppingsequenz, die für das Mobilteil und für die Basisstation, mit der kommuniziert werden soll, gleich ist, und den in der Speichereinrichtung gespeicherten Informationen.

10. Mobilteil nach Anspruch 9,
    bei dem die Speichereinrichtung (24) angeordnet ist, um während eines Anmeldevorgangs vor Inbetriebnahme die Informationen von der Basisstation (10) zu erhalten.

11. Mobilteil nach Anspruch 10,
    bei dem die gespeicherten Informationen die RFPI-Nummer nach dem DECT-Standard der bestimmten Basisstation umfassen, wobei die RFPI-Nummer eine RPN-Nummer und eine FPN-Nummer umfaßt.

12. Mobilteil nach einem der Ansprüche 9 - 11, bei der die Einrichtung zum Erzeugen angeordnet ist, um die genau eine Hopping-Sequenz gemäß folgender Gleichung zu erzeugen:

$$f(i) = [\text{Basishoppingsequenz} (i + RPN) + RFPI(f12{:}f16) *$$

$$3] \text{ MODULO } N_{FHopmax}$$

wobei f eine Frequenz der genau einen Hopping-Sequenz ist, wobei "i" ein aktueller Frequenzindex ist, wobei "Basishoppingsequenz" die Basishoppingsequenz ist, wobei RFPI (f12:f16) die Bits f12 bis f16 der RFPI-Nummer gemäß dem DECT-Standard sind, die der Basisstation zugeordnet ist, wobei RPN die RPN-Nummer der Basisstation gemäß dem DECT-Standard ist, und wobei $N_{FHopmax}$ die maximale Anzahl der Hopping-Frequenzen in der genau einen Hopping-Sequenz ist.

13. Kommunikationsnetz mit folgenden Merkmalen:

   einer Basisstation nach einem der Ansprüche 1 bis 8; und

   einem Mobilteil nach einem der Ansprüche 9 bis 12.

14. Kommunikationsnetz nach Anspruch 13,
   das als synchrones Netz ausgeführt ist, und
   bei dem für jede einer Mehrzahl von Funkzellen eine Basisstation vorgesehen ist, wobei jede Basisstation angeordnet ist, um eine Kommunikation mit derselben Hopping-Sequenz durchzuführen, und wobei eine Hopping-Phase jeder Basisstation unterschiedlich ist.

15. Kommunikationsnetz nach Anspruch 13,
   das als asynchrones Netz ausgeführt ist, und
   bei dem eine Mehrzahl von Basisstationen in einer einzigen Funkzelle angeordnet ist, wobei jede Basisstation ausgestaltet ist, um eine eigene Hopping-Sequenz zu verwenden, und wobei jedes Mobilteil angeordnet ist, um über eine einzige Hopping-Sequenz mit nur der Basisstation zu kommunizieren, die diese einzige Hopping-Sequenz verwendet.

16. Verfahren zum Betreiben einer Basisstation, mit folgenden Schritten:

   Kommunizieren mit einem Mobilteil unter Verwendung einer Hopping-Sequenz aus einer Mehrzahl von Hopping-Sequenzen, wobei eine Hopping-Sequenz genau eine definierte zeitliche Abfolge von Sende/Empfangsfrequenzen aufweist, wobei in einer Hopping-Sequenz jede Sende/Empfangsfrequenz genau eine definierte nachfolgende Sende/Empfangsfrequenz hat, und wobei sich jede der Mehrzahl von Hopping-Sequenzen von einer anderen der Mehrzahl von Hopping-Sequenzen hinsichtlich der definierten zeitlichen Abfolge von Sende/Empfangsfrequenzen unterscheidet;

   Identifizieren der zum Kommunizieren verwendeten Hopping-Sequenz, so daß der Basisstation genau eine Hopping-Sequenz zugeordnet ist unter Verwendung von Informationen über eine Identität der Basisstation; und

   Erzeugen der Hopping-Sequenz unter Verwendung einer abgespeicherten Basishoppingsequenz, die für die Basisstation und für das Mobilteil, mit dem kommuniziert werden soll, gleich ist, und den Informationen über eine Identität der Basisstation.

17. Verfahren zum Betreiben eines Mobilteil, mit folgenden Schritten:

   Kommunizieren (22) mit einer Basisstation unter Verwendung einer Hopping-Sequenz aus einer Mehrzahl von Hopping-Sequenzen, wobei eine Hopping-Sequenz eine definierte zeitliche Abfolge von Sende/Empfangsfrequenzen aufweist, wobei in einer Hopping-Sequenz jede Sende/Empfangsfrequenz genau eine definierte nachfolgende Sende/Empfangsfrequenz hat, und wobei sich jede der Mehrzahl von Hopping-Sequenzen von einer anderen der Mehrzahl von Hopping-Sequenzen hinsichtlich der definierten zeitlichen Abfolge von Sende/Empfangsfrequenzen unterscheidet;

Speichern (24) von Informationen über die spezielle Hopping-Sequenz, die bei der Kommunikation mit einer bestimmten Basisstation zu verwenden ist, so daß das Mobilteil durch die gespeicherten Informationen für eine Kommunikation mit der bestimmten Basisstation unter Verwendung der speziellen Hopping-Sequenz vorbestimmt ist; und

Feststellen (26), ob in einer Funkzelle die bestimmte Basisstation sendet, wobei die Synchronisationseinrichtung (26) angeordnet ist, um unter Verwendung der gespeicherten Informationen bei einem Empfang einer Mehrzahl von gültigen Empfangsdaten herauszufinden, ob dieselben gemäß der speziellen Hopping-Sequenz eintreffen, und um bei Vorliegen der speziellen Hopping-Sequenz die Sende/Empfangseinrichtung (22) zu aktivieren, ohne daß die Synchronisationseinrichtung (26) Signalisierungsinformationen zu einer Basisstation sendet, um die Basisstation hinsichtlich ihrer verwendeten Hopping-Sequenz zu befragen; und

Erzeugen der Hopping-Sequenz unter Verwendung einer abgespeicherten Basishoppingsequenz, die für das Mobilteil und für die Basisstation, mit der kommuniziert werden soll, gleich ist, und den gespeicherten Informationen.

18. Verfahren zum Betreiben eines Kommunikationsnetzes mit folgenden Schritten:

Betreiben einer Basisstation durch ein Verfahren nach Patentanspruch 16; und

Betreiben eines Mobilteils durch ein Verfahren nach Patentanspruch 17.

19. Verfahren zum Anmelden eines Mobilteils (20) nach Patentanspruch 9 bei einer Basisstation (10) nach Patentanspruch 1, mit folgenden Schritten:

Versetzen der Basisstation (10) in einen Anmelde-Modus;

Kommunizieren von Informationen über einen Identität der Basisstation (10) zu dem Mobilteil (20) unter Verwendung einer vorbestimmten Anmelde-Hopping-Sequenz, die dem Mobilteil und der Basisstation bekannt ist; und

Speichern (24) der Informationen über die Identität der Basisstation (10) in dem Mobilteil (20), so daß das Mobilteil angeordnet ist, um unter Verwendung einer der Basisstation zugeordneten Hopping-Sequenz mit der Basisstation kommunizieren zu können.

10

┌─────────────────────────────┐
│  ┌───────────────────────┐  │
│  │   Sende-/ Empfangs-   │──── 12
│  │     einrichtung       │  │
│  └───────────────────────┘  │
│            ↕                 │
│  ┌───────────────────────┐  │
│  │  Identifikationseinr.  │──── 14
│  └───────────────────────┘  │
└─────────────────────────────┘

Basisstation

# Fig. 1

20

┌─────────────────────────────┐
│  ┌───────────────────────┐  │
│  │   Sende-/ Empfangs-   │──── 22
│  │     einrichtung       │  │
│  └───────────────────────┘  │
│                              │     Mobilteil
│  ┌───────────────────────┐  │
│  │   Synchronisations-   │  │
│  │     einrichtung       │  │
26 ──│                       │  │
│  └───────────────────────┘  │
│  ┌───────────────────────┐  │
│  │      Speicher-        │  │
│  │     einrichtung       │  │
24 ──│                       │  │
│  └───────────────────────┘  │
└─────────────────────────────┘

# Fig. 2

RFPI Class A

f12 f16

| E | A | EMC | FPN | | RPN |
|---|---|-----|-----|---|-----|
| 1 | 3 | 16 | 17 | | 3 |

## Fig. 3

DECT - Network Layer }            OSI-Network Layer

DECT-DLC-Layer }

            OSI-Data Link Layer

DECT-MAC-Layer }

DECT-Physical-Layer }            OSI-Physical Layer

100

## Fig. 4

**Europäisches Patentamt**

# EUROPÄISCHER RECHERCHENBERICHT

Nummer der Anmeldung

EP 01 12 9557

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 179 569 A (SAWYER JONATHAN) 12. Januar 1993 (1993-01-12) | 1-3,5-7, 9,11, 13-18 | H04B7/26 |
| Y | * Spalte 6, Zeile 1 - Zeile 60 * <br> * Spalte 6, Zeile 1 - Zeile 60 * <br> * Spalte 6, Zeile 18 - Zeile 21 * | 4,10 | |
| Y | WO 99 09678 A (SCHLIWA PETER ;SYDON UWE (DE); MUELLER ANDREAS (DE); SIEMENS AG (D) 25. Februar 1999 (1999-02-25) <br> * Zusammenfassung * | 4 | |
| Y | US 4 850 036 A (SMITH JAMES W) 18. Juli 1989 (1989-07-18) <br> * Zusammenfassung * | 10 | |
| A,D | US 4 554 668 A (BUTIN HENRI  ET AL) 19. November 1985 (1985-11-19) <br> * das ganze Dokument * | 1,9,16, 17 | |

RECHERCHIERTE SACHGEBIETE (Int.Cl.7)

H04B

Der vorliegende Recherchenbericht wurde für alle Patentansprüche erstellt

| Recherchenort | Abschlußdatum der Recherche | Prüfer |
|---|---|---|
| MÜNCHEN | 22. April 2002 | Bodin, C-M |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 01 12 9557

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2002

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 5179569 | A | 12-01-1993 | US | 4835372 | A | 30-05-1989 |
| | | | US | 5640301 | A | 17-06-1997 |
| | | | US | 5307372 | A | 26-04-1994 |
| | | | CA | 1261968 | A1 | 26-09-1989 |
| | | | EP | 0230458 | A1 | 05-08-1987 |
| | | | JP | 63500546 | T | 25-02-1988 |
| | | | WO | 8700659 | A1 | 29-01-1987 |
| | | | US | 4857716 | A | 15-08-1989 |
| WO 9909678 | A | 25-02-1999 | WO | 9909678 | A1 | 25-02-1999 |
| | | | CA | 2300129 | A1 | 25-02-1999 |
| US 4850036 | A | 18-07-1989 | JP | 1071344 | A | 16-03-1989 |
| | | | JP | 1896257 | C | 23-01-1995 |
| | | | JP | 5088016 | B | 20-12-1993 |
| | | | KR | 9107712 | B1 | 30-09-1991 |
| US 4554668 | A | 19-11-1985 | FR | 2527871 | A1 | 02-12-1983 |
| | | | CA | 1214215 | A1 | 18-11-1986 |
| | | | DE | 3363259 | D1 | 05-06-1986 |
| | | | DK | 233783 | A | 28-11-1983 |
| | | | EP | 0095959 | A1 | 07-12-1983 |
| | | | GR | 77474 | A1 | 24-09-1984 |
| | | | JP | 58219845 | A | 21-12-1983 |

EPO FORM P0461

Für nähere Einzelheiten zu diesem Anhang : siehe Amtsblatt des Europäischen Patentamts, Nr.12/82